Europäisches Patentamt

European Patent Office

Office européen des brevets

(19)

(11) **EP 1 096 638 A1**

(12) **EUROPEAN PATENT APPLICATION**
published in accordance with Art. 158(3) EPC

(43) Date of publication:
02.05.2001 Bulletin 2001/18

(51) Int. Cl.$^7$: **H02J 7/00**, H02J 17/00, H04B 5/00

(21) Application number: 00909761.9

(22) Date of filing: 21.03.2000

(86) International application number:
PCT/JP00/01705

(87) International publication number:
WO 00/55955 (21.09.2000 Gazette 2000/38)

(84) Designated Contracting States:
AT BE CH CY DE DK ES FI FR GB GR IE IT LI LU MC NL PT SE

(30) Priority: 18.03.1999 JP 7442499
30.09.1999 JP 27996699

(71) Applicant:
SEIKO EPSON CORPORATION
Shinjuku-ku, Tokyo 163-0811 (JP)

(72) Inventors:
• AOSHIMA, Ichiro,
Seiko Epson Corporation
Suwa-shi, Nagano 392-8502 (JP)

• HAYAKAWA, Motomu,
Seiko Epson Corporation
Suwa-shi, Nagano 392-8502 (JP)
• KOSUDA, Tsukasa,
Seiko Epson Corporation
Suwa-shi, Nagano 392-8502 (JP)
• HONDA, Katsuyuki,
Seiko Epson Corporation
Suwa-shi, Nagano 392-8502 (JP)

(74) Representative:
Sturt, Clifford Mark et al
Miller Sturt Kenyon
9 John Street
London WC1N 2ES (GB)

(54) **ELECTRONIC DEVICE AND METHOD OF CONTROLLING ELECTRONIC DEVICES**

(57) In an electronic device in which a charge path to a secondary battery and a signal path to a reception device are partially shared and a receiving-time current due to the reception is made to be a charging current for the secondary battery, even in a case in which the voltage across the secondary battery is close to a tolerance voltage, by bypassing the charge current due to the signal reception, the voltage across the secondary battery is controlled so as not to exceed the tolerance voltage.

FIG. 3

EP 1 096 638 A1

## Description

Technical Field

The present invention relates to electronic devices and to control methods for the electronic devices, and more particularly, relates to an electronic device and to a control method for the electronic device in which, by partially sharing a charging path for supplying drive electric power to a secondary battery incorporated therein and a signal path for receiving signals from the outside, the secondary battery can be charged during reception of signals.

Background Art

Recently, devices which have a construction in which a small portable electronic device such as a portable terminal or an electronic watch, is placed into a charger called a "station" whereby the electronic device is charged, are known.

In such a construction, a lithium-ion secondary battery, provided as a storage device for storing charged electrical energy, is provided in the small portable electronic device.

This lithium-ion secondary battery has features such as high voltage, high energy density, and relatively lower self-discharge. It is often used in small portable electronic devices (such as portable telephones, camera-integrated type videotape recorders, and notebook type personal computers) which require particularly high energy density.

When more than a so-called "tolerance voltage" is applied to the above-described lithium-ion secondary battery, dendritic deposits form and then internal short-circuiting phenomena occur, which ultimately shortens the life of the battery.

Hence, as a common charging method, constant current charging is applied to the lithium-ion secondary battery until the charged voltage across the lithium-ion secondary battery reaches the tolerance voltage. After the charged voltage reaches the tolerance voltage, charging is performed at a constant voltage (see Japanese Unexamined Patent Publication No. 5-111184 for details).

Moreover, when charging is performed between a small portable electronic device and the charger, a limiter circuit for limiting the increase in voltage across the battery is provided so that the battery voltage across the lithium-ion secondary battery does not exceed the tolerance voltage.

Not only charging, but also communication, is performed between the small portable electronic device and the charger by partially sharing a charging path and a signal-receiving path. In addition, in a case in which charging and data communication are performed using the same system (for example, an electromagnetic coupling system or an optical coupling system) the battery voltage across the lithium-ion secondary battery must be controlled so as not to exceed the tolerance voltage by causing the above-described limiter circuit to operate so that the battery voltage across the lithium-ion secondary battery does not exceed the tolerance voltage while charging is performed.

However, when a small portable electronic device receives a signal and the limiter circuit is activated, the limiter circuit prevents voltage variations from being conducted to a reception circuit. Accordingly, the reception circuit fails to receive the signal.

Therefore, the limiter circuit is constructed so as to be inactive while communication is performed.

Accordingly, when a small portable electronic device receives data, there is an advantage in that the small portable electronic device can be charged using surplus electric power not required for communication. However, when the battery voltage across the lithium-ion secondary battery of the small portable electronic device is close to the tolerance voltage, there is a problem in that the battery voltage across the lithium-ion secondary battery will exceed the tolerance voltage, which shortens the life of the lithium-ion secondary battery.

Accordingly, objects of the present invention are to provide an electronic device and a control method for the electronic device in which the voltage across the secondary battery can be prevented from exceeding the tolerance voltage and the secondary battery can be prevented from being degraded when a receiving-time current occurring during communicating acts as a charging current.

Disclosure of Invention

An electronic device according to the present invention is characterized in that there are provided a storage device in which charging can be performed from the outside, the charged voltage set so as not to exceed a predetermined tolerance voltage, a reception device for receiving a signal from the outside, and a charge current control means for controlling a charge current, sent to the storage device by the reception device, so as not to exceed the tolerance voltage. By partially sharing a charge path to the storage device and a signal path to the reception device, charging is applied to the storage device at the time of reception by the reception device.

An electronic device according to another aspect of the present invention includes a storage device in which charging can be performed from the outside, the charged voltage set so as not to exceed a predetermined tolerance voltage, and a reception circuit in which a signal from the outside are received, whereby partial sharing of a charging path to the storage device and a signal path to the reception circuit enables charging to be applied to the storage device at the time of reception by the reception circuit. The electronic device is characterized in that there is provided an energy balance control means for controlling the accumulated voltage across the storage device so as not to exceed the tolerance voltage by controlling balance between charge energy to the storage device and discharge energy from the storage device.

An electronic device according to still another aspect of the present invention includes a storage device in which charging can be performed from the outside, the charge voltage set so as not to exceed a predetermined tolerance voltage, and a reception circuit in which a signal from the outside is received, whereby partial sharing of a charging path to the storage device and a signal path to the reception circuit enables charging to be applied to the storage device at the time of reception by the reception circuit. The electronic device is characterized in that the charge current control means is provided with an accumulated voltage detection means for measuring the accumulated voltage across the storage device, and a switching means provided between the reception circuit and the storage device for causing the reception circuit and the storage device to be disconnected when the accumulated voltage detected by the accumulated voltage detection means exceeds the tolerance voltage.

A control method is provided for an electronic device according to the present invention including a storage device in which charging can be performed from the outside and the charge voltage is set so as not to exceed a predetermined tolerance voltage, and a reception circuit in which a signal from the outside is received, whereby partial sharing of a charging path to the storage device and a signal path to the reception circuit enables charging to be applied to the storage device at the time of reception by the reception device. The control method for an electronic device is characterized in that there are provided a voltage measuring step for measuring the voltage across the storage device and a charge current bypass step for controlling the voltage across the storage device so as not to exceed the tolerance voltage, by bypassing the charge current to the storage device from the reception, by a predetermined amount based on the measured voltage across the storage device.

Brief Description of the Drawings

Fig. 1 is a plan view showing constructions of a station and an electronic watch according to an embodiment of the present invention.
Fig. 2 is a cross-sectional view showing the constructions of the station and the electronic watch according to an embodiment of the present invention.
Fig. 3 is a general construction block diagram of main components of the electronic watch in Fig. 1.
Fig. 4 is a diagram illustrating the charging-time voltage across a secondary battery.
Fig. 5 is a diagram illustrating the operating principle of the present invention.
Fig. 6 is a general construction block diagram of a charge current control circuit according to a second embodiment.
Fig. 7 is a diagram illustrating one example of a resistor unit.
Fig. 8 is a graph illustrating the relationship between a charge current and a battery voltage.
Fig. 9 consists of diagrams illustrating control period instruction data.
Fig. 10 is a diagram illustrating advantages of the second embodiment.
Fig. 11 is a diagram illustrating a modified example of the second embodiment.
Fig. 12 is a graph illustrating operation of a third embodiment.
Fig. 13 is a diagram illustrating operation of a fourth embodiment.
Fig. 14 is a diagram illustrating operation of a fifth embodiment.
Fig. 15 is a graph illustrating the relationship between normal battery voltage and communicating-time battery voltage.
Fig 16 is a general construction block diagram of main components of an electronic watch of a fourth modified example of the embodiment.
Fig. 17 consists of diagrams illustrating a modified example of the second embodiment.
Fig. 18 is a diagram illustrating a modified example of the above-described embodiment.

Best Mode for Carrying Out the Invention

In order to more fully describe the present invention, this is explained with reference to the attached drawings.

[1] First Embodiment

The first embodiment of the present invention will be described. Although in the present embodiment an example in which an electronic watch is used as an electronic device and a station is used for charging the electronic watch as well as for communicating with the electronic watch is described, the present invention is not intended to be limited thereto.

[1.1] Mechanical Construction

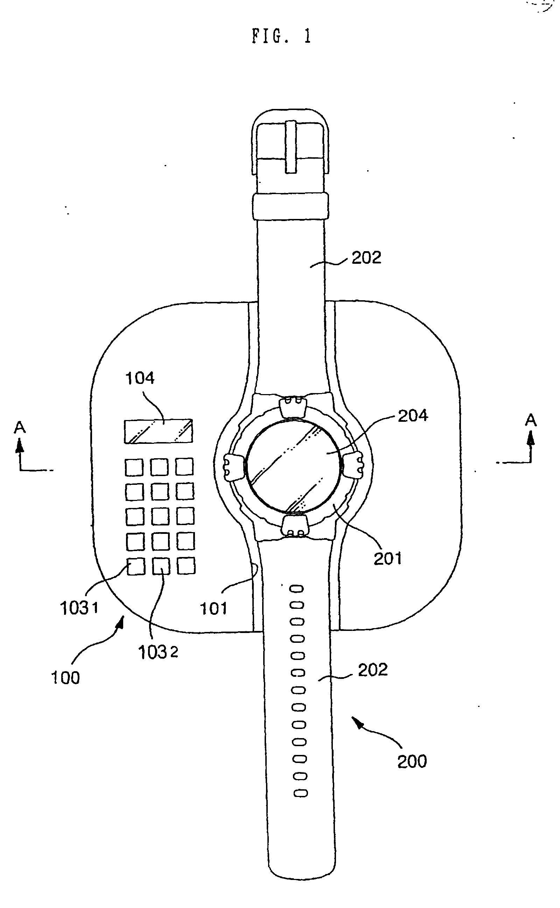

Fig. 1 shows a plan view of the electronic watch and the station according to the embodiment.

As shown in Fig. 1, an electronic watch 200 is contained in a concave part 101 of a station 100 when charging, data transfer, or the like is performed. Since this concave part 101 is formed to have a shape in which the concave part 101 is slightly larger than the main body 201 of the electronic watch 200 and the band 202, the main body 201 of the watch is cradled so as to be accommodated in the station 100.

The station 100 is provided with various input units such as a charging start button 1031 for instructing the start of charging, a transfer start button 1032 for instructing the start of data transfer, and a display unit 104 for displaying various displays. The electronic watch 200 according to the present embodiment is constructed so as to be worn on a wrist of a user in a normal operating condition so as not only to display the date, the time, and the like on a display unit 204, but also to sense and store, using a sensor or the like which is not shown, vital information, such as the pulse rate or the heart rate, every predetermined time period.

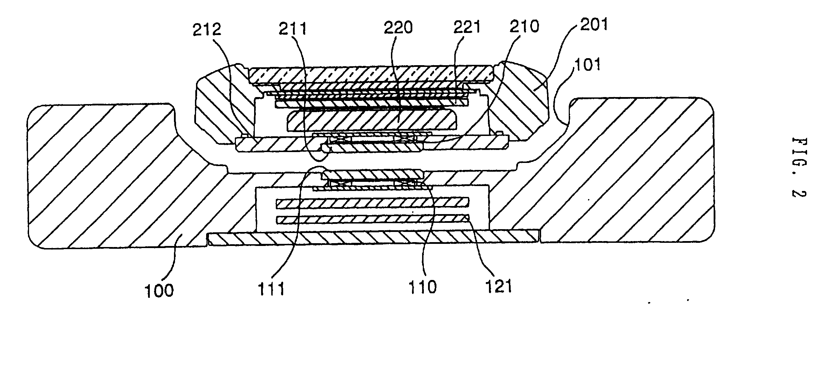

Fig. 2 is a cross sectional view taken along line A-A in Fig. 1. As shown in this figure, a watch-side inductor 210 for transferring data and for charging is provided via a cover glass 211 in a bottom back cover 212 of the main unit 201 of the electronic watch. The main body 201 of the watch is provided with a circuit substrate 221 connected to a secondary battery 220, the watch-side inductor 210, and the like.

On the other hand, in the concave part 101 of the station 100, a station-side inductor 110 is provided via a cover glass 111 at a position which faces the watch-side inductor 210. The station 100 is provided with the inductor 110, the charging start button 1031, the transfer start button 1032, the display unit 104, and a circuit substrate 121 connected to a primary source (not shown) and the like.

Thus, in a state in which the electronic watch 200 is cradled in the station 100, although the station-side inductor 110 and the watch-side inductor 210 are not physically in contact with each other because of the cover glasses 111 and 211, since the inductor winding faces thereof are substantially in parallel, the station-side inductor 110 and the watch-side inductor 210 are in an electromagnetically coupled state,

The station-side inductor 110 and the watch-side inductor 210 are air-core inductors having no core in order to avoid magnetization of mechanical parts of the watch to avoid increasing the weight of the watch-side, to avoid exposure of magnetic metals, and the like. Hence, the adoption of an inductor having a core may be applied to an electronic device in which these reasons do not matter. However, when the frequency of a signal applied to the inductor is sufficiently high, the air-core inductor suffices.

[1.2] General Construction of Electronic Watch

Next, a general construction of the electronic watch is described.

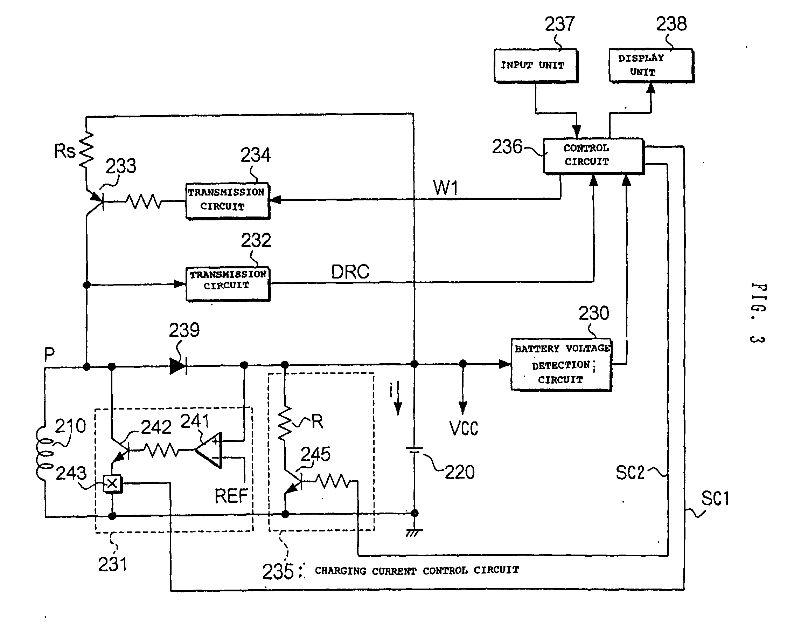

Fig. 3 shows a general construction block diagram of the main components of the electronic watch.

The electronic watch 200 is roughly divided into the watch-side inductor 210 serving as a transmission/reception antenna for electromagnetic coupling data; a secondary battery 220 serving as a storage means; a battery voltage detection circuit 230 for detecting the battery voltage across the secondary battery 220; the limiter circuit 231 for electrically disconnecting the secondary battery 220 from the watch-side inductor 210 when the voltage across the secondary battery 220 exceeds a predetermined limit voltage; a reception circuit 232 for receiving various signals via the watch-side inductor 210 and outputting the reception data DRC; a transmission circuit 234 for transmitting various signals via a drive transistor 233 and a transmission resistor $R_S$; a charge current control circuit 235 for controlling charge current of the secondary battery 220 when the reception circuit 232 receives the signals; a control circuit 236 for controlling the entirety of the electronic watch 220; an input unit 237 for allowing a user to input various data; a display unit 238 for displaying various information under the control circuit 236; and a reverse-current protection diode 239 for preventing a reverse current from the watch-side inductor 210.

The limiter circuit 231 is constructed to be provided with a comparator 241 for setting "H" level to a limit control signal when the voltage across the secondary battery 220 exceeds a reference voltage $R_{EF}$ corresponding to a predetermined tolerance voltage; a transistor switch 242 electrically disconnecting the secondary battery 220 from the watch-side inductor 210 by causing the output terminal of the watch-side inductor to be in a short-circuit state due to the switch being turned on when the limit control signal output from the comparator 241 is at the "H" level; and an analog switch 243 normally causing the limiter circuit 231 to be turned on while causing it to be in an inactive state under the control of the control circuit 236.

The charge current control circuit 235 is provided with a transistor switch 245 turned on by causing the control circuit 236 to set the "H" level to the charge current control signal when the reception Circuit receives the signals; and a charge current control resistor R controlling a charge current flowing via the secondary battery 220 by causing a current corresponding to the resistance to flow as a bypass current when the transistor switch is on.

[1.3] Relationship between Charging-Time Voltage and Charge Current

Here, the relationship between the charging-time voltage across the secondary battery 220 and the charge current will be described.

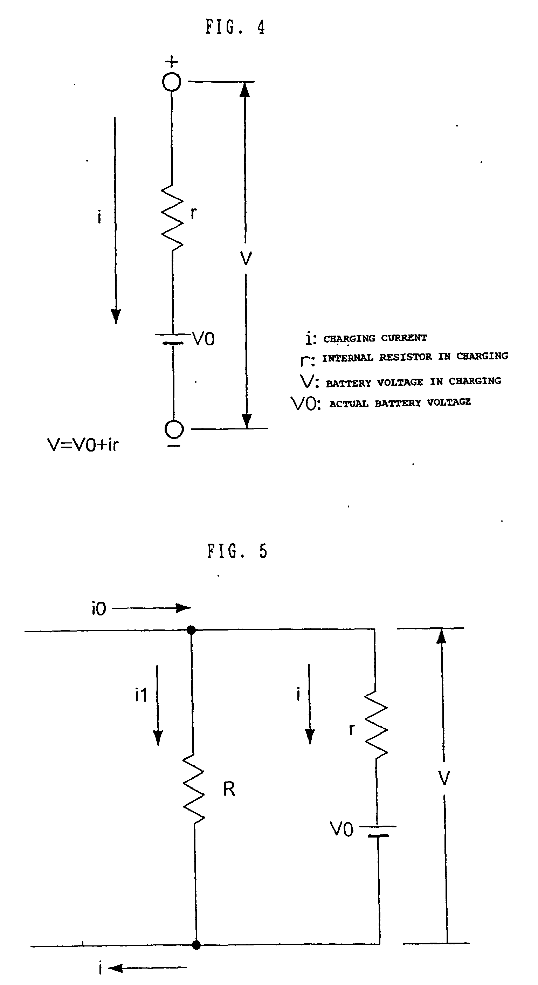

Fig. 4 shows an equivalent circuit diagram of the secondary battery 220.

As shown in Fig. 4, in a case in which the actual battery voltage across the secondary battery 220 is denoted as $V_0$ and the internal resistance of the secondary battery 220 is denoted as r, when a charge current i flows, a charging-time voltage V across the secondary battery 220 is represented by the following expression:

$$V = V_0 + I \cdot r.$$

[1.4] Operation Principle of the Charge Current Control Circuit

Next, the operating principle of the charge current control circuit will be described.

As described above, since the charging-time voltage V across the secondary battery 220 is represented by the expression

$$V = V_0 + i \cdot r,$$

when the tolerance voltage across the secondary battery 220 is denoted as V', the charge current i may be controlled so that $V \leq V'$ is satisfied.

Hereinafter, setting methods are described for the charge current control resistor so that this condition is satisfied.

[1.4.1] Setting Method for the Charge Current Control Resistor R (Part 1)

Here, among the setting methods for the charge current control resistor R, a simple method is described with reference to Fig. 5.

When the resistance of the charge current control resistor is denoted as R and the current flowing via the charge current control resistor is denoted as $i_1$, since

$$V \leq V', \tag{1}$$

$i_1 \cdot R \leq V'$, that is, it is sufficient that

$$i_1 \leq V'/R$$

is satisfied.

Furthermore, when

$$i \leq 0,$$

the secondary battery 220 is not charged. Since

$$i_0 = i_1 + i, \tag{2}$$

$$i_0 \leq i_1$$

Therefore, based on the expressions (1) and (2), it is sufficient that

$$i_0 \leq V' / R \tag{3}$$

is satisfied. This expression (3) is changed. When

$$R \leq V' / i_0$$

is satisfied, the secondary battery 220 is not charged.

To be more specific, in a case in which the tolerance voltage $V' = 4$ [V] and the input current $i_0 = 10$ [mA], since

$$R \leq 4/10 \times 10^{-3} = 400 \ [\Omega],$$

it is sufficient that the resistance of the charge current control resistor $R = 400$ [$\Omega$] is set.

[1.3.2] Setting Method for the Charge Current Control Resistor R (Part 2)

The above-described setting method for the charge current control resistor R (Part 1) is a method which simply sets the resistance of the charge current control resistor. The present setting method is a method which more accurately sets the resistance of the charge current control resistor.

As shown in Fig. 5,

$$i_0 = i_1 + i \tag{1}$$

and

$$V = i_1 \cdot R \tag{2}$$

$$= i \cdot r + V_0 \tag{3}$$

are obtained. Here, when the expression (2) is changed,

$$i_1 = V/R \tag{4}$$

is obtained. When the expression (3) is changed,

$$i_1 = \{1/(R+r)\} \cdot (i_0 \cdot r + V_0) \tag{5}$$

is obtained.

Based on the expressions (1) and (4)

$$i_1 = i_0 - V/R \tag{6}$$

$$= i_0 - \{(i_0 \cdot r + V_0)/(R+r)\} \tag{7}$$

is obtained.

Furthermore, based on the expressions (4) and (5),

$$V = R/(R + r)(i_0 \cdot r + V_0) \tag{8}$$

is obtained. Since it is sufficient that

$$V \leq V' \tag{9}$$

is satisfied, based on the expressions (8) and (9), the following expression (10)

$$R \leq (r \cdot V')/(i_0 \cdot r + V_0 - V') \tag{10}$$

holds.

Therefore, by setting the charge current control resistor R based on the input current $i_0$, the internal resistance r of the secondary battery, the actual battery voltage $V_0$, and the tolerance voltage V', the voltage across the secondary battery 220 does not exceed the tolerance voltage V'.

[1.5] operations of the First Embodiment

Next, operations of the electronic watch 200 according to the first embodiment are described particularly when signals are received.

The watch-side inductor 210 of the electronic watch 200 functions as a transmitting and receiving antenna for electromagnetic coupling data. When a signal is transmitted from the station-side inductor 110 of the station 100, notification to that effect is sent to the control circuit 236.

Because of this, the control circuit 236 outputs a control signal SC1 and causes the analog switch 243 of the limiter circuit 231 to be turned off.

Hence, regardless of whether the transistor switch 242 is turned on or off, the limiter circuit 231 does not effectively operate.

After that, the reception circuit 232 receives various signals via the watch-side inductor 210 and outputs the received data to the control circuit 236.

While this reception circuit 232 receives various signals, the battery voltage detection circuit 230 detects the battery voltage across the secondary battery 220 and reports the detection result to the control circuit 236.

On the other hand, when the charging-time voltage V, which is detected by the battery voltage detection circuit 230, and which is the battery voltage across the secondary battery 220 during charging, exceeds a predetermined activation threshold voltage VTH, the control circuit 236 causes the switch transistor 245 to be turned on by outputting a control signal $SC_2$.

As a result, in a case in which the charge current i is controlled using the above-described first method (the setting method for the charge current control resistor R: Part 1), since the charge current control resistor R is set with respect to the tolerance voltage V' across the secondary battery 220 so that the relationship

$$R \leq V' / i_0$$

is satisfied, when the reception circuit 232 receives the signals, the current i flowing via the secondary battery 220

$$i \leq 0.$$

Hence, the secondary battery 220 is not charged.

In a case in which the charge current i is controlled using the above-described second method (the setting method for the charge current control resistor R: Part 2), since the charge current control resistor R is set with respect to the tolerance voltage V' across the secondary battery 220, the internal resistance of the secondary battery 220, and the actual battery voltage $V_0$ so that the relationship

$$R \leq (r \cdot V')/(i_0 \cdot r + V_0 - V')$$

is satisfied. Hence, since the charging-time voltage V across the secondary battery 220 is always satisfied by the relationship

$$V \leq V',$$

the voltage V across the secondary battery 220 does not exceed the tolerance voltage V'.

[1.6] Advantages of the First Embodiment

As described above, according to the first embodiment, when signals are received, since the voltage across the secondary battery does not exceed the tolerance voltage, degradation of the secondary battery due to reception of the signals can be prevented.

[2] Second Embodiment

In the above-described first embodiment, in a case in which the voltage across the secondary battery exceeds a predetermined voltage, regardless of the mode of the reception signal, charge current control is performed with the same processing. However, in this second embodiment, the charge current is controlled in accordance with the mode of the reception signal.

[2.1] Construction of the Charge Current Control Circuit According to the Second Embodiment

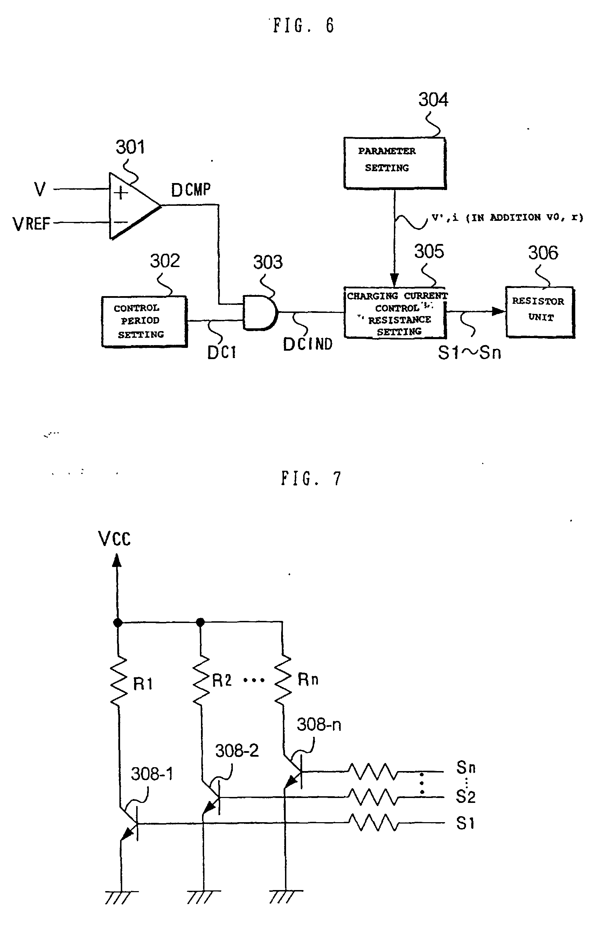

Fig. 6 shows the construction of the charge current control circuit according to this second embodiment.

A charge current control circuit 300 is provided with a comparator 301 for comparing the charge voltage V with a predetermined reference voltage $V_{REF}$ and outputting the comparison result data $D_{CMP}$; a control period setting unit 302 for generating and outputting control period setting data $D_{CI}$ for setting a period for performing charge current control; an AND circuit 303 for applying the logical product of the comparison result data and the control period setting data, and outputting the product as control period instruction data $D_{CIND}$; a parameter setting unit 304 for setting, as parameters, at least the tolerance voltage V' and the charge current i from among the tolerance voltage V', the charge current i, the actual battery voltage $V_0$, and the internal resistance r of the secondary battery; a charge current control resistance setting unit 305 for outputting corresponding control signals $S_1$ to $S_n$ in order to select, based on the parameters V', i, ($V_0$, r), and the control period instruction data $D_{CIND}$, one or a plurality of charge current control resistors to be actually used from among the described-below charge current control resistors $R_1$ to $R_n$; and a resistor unit 306 for changing the resistance of the actual charge current control resistor based on corresponding control signals $S_1$ to $S_n$.

Fig. 7 shows one example construction of the resistor unit 306.

The resistor unit 306 is provided with transistor switches 308-1 to 308-n in which a transistor switch is turned by causing the charge current control resistance setting 305 to set the "H" level to the corresponding control signal $S_X$ (X = 1 to n) during the reception operation; and charge current control resistors $R_X$ (X = 1 to n) controlling the charge current flowing via the secondary battery 220 by, when a transistor switch 308-X (X = 1 to n) is turned on, causing the current corresponding to the resistance of the resistor unit 306 to flow as the bypass current.

Here, a reason the resistor unit 306 is provided instead of the charge current control resistor R in the first embodiment is described.

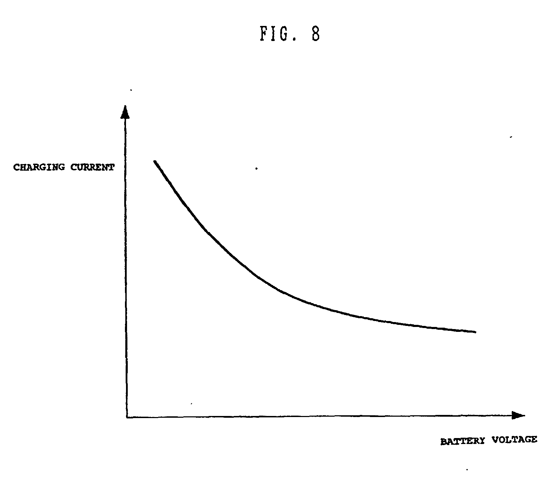

As shown in Fig. 8, the charge current of the secondary battery 220 is varied in accordance with the battery voltage. The higher the battery voltage becomes, the lower the charge current i becomes.

Accordingly, as shown in the first embodiment, when the resistance of the charge current control resistor is constant, the charge current i becomes high in a case in which the battery voltage is low. Even though the charge current is bypassed via the charge current control resistor, there is a problem in that the voltage across the secondary battery 220 can become so high as to exceed the tolerance voltage V'.

As the secondary battery degrades, the resistance of the internal resistance r becomes higher over time. Because of this, the charge current control resistor R, to be determined using the above-described second method, is varied over time.

Therefore, in this second embodiment, by varying the resistance of the charge current control resistor in accordance with the battery voltage across the secondary battery 220, the amount of bypass charge current is caused to be variable, so that the voltage across the secondary battery 220 is maintained below the tolerance voltage V'.

[2.2]

Next, before the operation of the second embodiment is described, an example operation of the control period setting unit 302 is described.

Although this case in which one set of data is constituted as two-byte data is described, the present invention is not limited to this.

[2.2.1] Case in which Unmodified Output of the Reception Circuit is Used

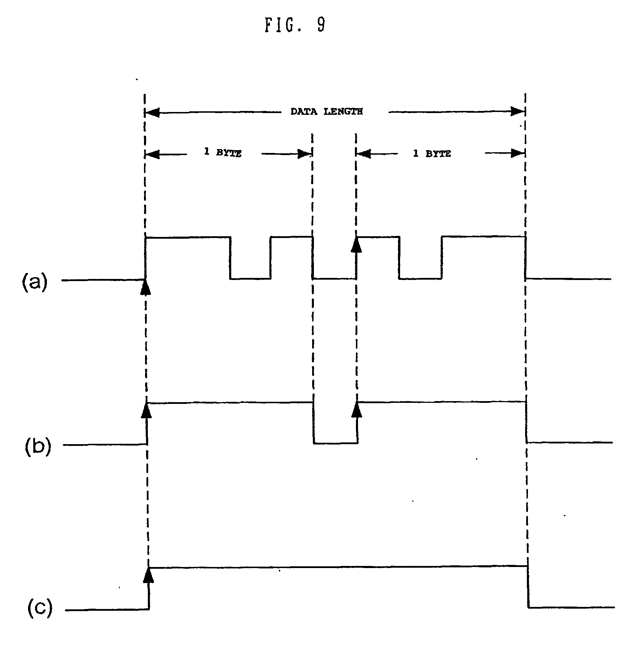

In this case, the control period setting unit 302 simply outputs the pattern, as shown in Fig. 9(a), of reception data DRC received via the reception circuit as control period setting data $D_{CI}$.

Therefore, only during the period in which the reception data DRC is maintained at the "H" level, that is, only during the period in which the charge current is considered to flow into the secondary battery 220 in accordance with reception of the reception data DRC, the charge current control is performed.

[2.2.2] Case in which Output Data from the Reception Circuit is Detected According to the Byte and is Used

In this case, as shown in Fig. 9(b), the control period setting unit outputs the control period setting data $D_{CI}$ which is the "H" level at the start bit of the data of each one byte which constitutes the reception data DRC received via the reception circuit and which is the "L" level at the reception terminating timing of the one byte data.

Therefore, the charge current control is performed one byte at a time regardless of the data content of the reception data DRC.

[2.2.3] Case in which the Output Data of the Reception Circuit is Detected According to the Length of a Set of Data (One Data Length) and is Used

In this case, as shown in Fig. 9(c), the control period setting unit outputs the control period setting data $D_{CI}$ which is the "H" level at the start bit of the first data of one set of data which constitutes the reception data DRC received via the reception circuit and which is the "L" level at the reception terminating timing of the one set of data.

For example, in Fig. 9(c), during the period corresponding to the length of the one set of data, which is two bytes, the data $D_{CI}$ is maintained at the "H" level.

Therefore, the charge current control is performed according to the data length of the one set of data regardless of the data content of the reception data DRC.

[2.3] Operations of the Charge Current Control Circuit

Next, the operations of the charge current control circuit according to this second embodiment is described with reference to Figs. 6, 7, and 9.

The comparator 301 of the charge current control circuit 300 compares the charge voltage V with the predetermined reference voltage $V_{REF}$ and outputs the comparison result data $D_{CMP}$ to the AND circuit 303.

As a result of this, during the period in which the comparison result data $D_{CMP}$ is maintained at the "H" level and the control period setting data $D_{CI}$ is maintained at the "H" level, that is, during the period in which the charge voltage V exceeds the reference voltage $V_{REF}$ and the control period setting data $D_{CI}$ is maintained at the "H" level, the AND circuit 303 outputs the control period instruction data $D_{CIND}$ as the "H" level to the charge current control resistance setting unit 305.

In a case in which the charge current control resistor R is set using the above-described first method, the parameter setting unit 304 outputs the tolerance voltage V' and the charge current i as parameters to the charge current control resistance setting unit 305. In a case in which the charge current control resistor R is set using the above-described second method, the parameter setting unit 304 outputs the tolerance voltage V', the charge current i, the actual battery voltage $V_0$, and the internal resistance r as parameters to the charge current control resistance setting unit 305.

As a result, during the period represented by the control period instruction data $D_{CIND}$ in order to select one or a plurality of charge current control resistors to be actually used from among the charge current control resistors $R_1$ to $R_n$ based on the parameters (= -V', i, $V_0$, r), the charge current control resistance setting unit 305 sets the "H" level to corresponding control signal $S_X$ (X: 1 to n) and outputs it to the resistor unit 306.

This allows the resistor unit 306 to turn on a transistor whose control signal is at the "H" level and to insert the corresponding charge current control resistor $R_X$ to the circuit.

To be more specific, in a case in which charge current control resistors which are required for obtaining a combined resistor $R_{SGM}$ which is required for allowing a desired current to flow via the resistor unit 306 are $R_1$ and $R_2$, the control signals $S_1$ and $S_2$ are set as the "H" level.

As a result of this, the transistors 308-1 and 308-2 are turned on, which insert the charge current control resistors $R_1$ and $R_2$ between the power source $V_{CC}$ and the ground. The resistance of the combined resistor $R_{SGM}$ is

$$R_{SGM} = (R_1 + R_2) / (R_1 \cdot R_2).$$

In a case in which the charge current i is controlled using the above-described first method (the setting method for the charge current control resistor R: Part 1), this combined resistor $R_{SGM}$ is set with respect to the tolerance voltage V' of the secondary battery 220 so that the relationship

$$R_{SGM} \leq V' / i_0$$

is satisfied. Hence, while the reception circuit 232 receives the signals, since the current i flowing via the secondary battery 220 is

$$i \leq 0,$$

the secondary battery 220 is not charged.

In a case in which the charge current i is controlled using the above-described second method (the setting method for the charge current control resistor R: Part 2), the combined resistor $R_{SGM}$ is set with respect to the tolerance voltage V' of the secondary battery 220, the internal resistance of the secondary battery 220, and the actual battery voltage $V_0$ so that the relationship

$$R_{SGM} \leq (r \cdot V')/(i_0 \cdot r + V_0 - V')$$

is satisfied. Hence, since the charging-time voltage V of the secondary battery 220 is always satisfied by the relationship

$$V \leq V',$$

the voltage V of the secondary battery 220 does not exceed the tolerance voltage V'.

[2.4] Advantages of the Second Embodiment

As described above, according to this second embodiment, when signals are received, since the charge current is controlled in accordance with the mode of the reception signal, the voltage across the secondary battery does not exceed the tolerance voltage, which can prevent the secondary battery from being degraded when signals are received.

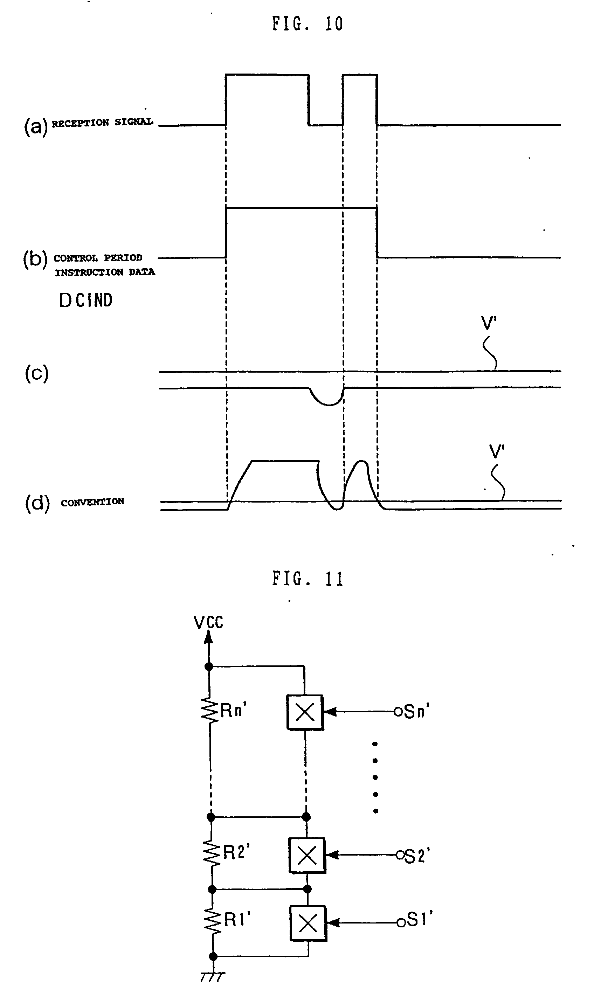

That is, in a case in which a signal as shown in Fig. 10(a) is received, as shown in Fig. 10(b), the "H" level is set to the control period instruction data $D_{CIND}$. During the period in which the control period instruction data $D_{CIND}$ is maintained at the "H" level, the charge current is bypassed.

Therefore, unlike a conventional example shown in Fig. 10(d), the voltage across the secondary battery does not exceed the tolerance voltage V' as shown in Fig. 10(c), so that the degradation of the secondary battery accompanied by the signal reception can be prevented.

[2.5] Modified Examples According to the Second Embodiment

[2.5.1] A First Modified Example

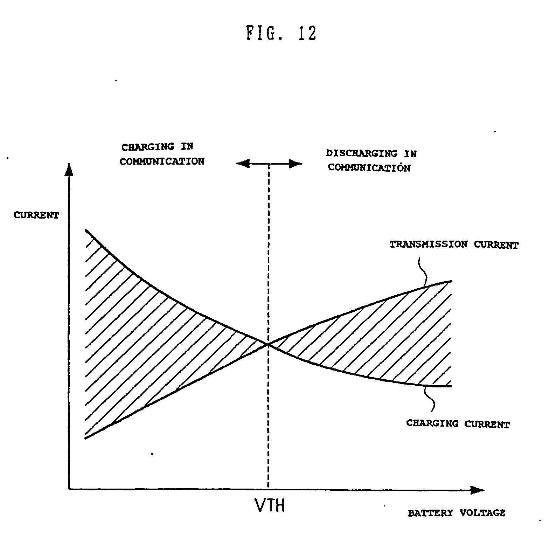

In the above-described description of the second embodiment, the construction of the resistor unit 306 is one in which the resistors are connected in parallel. However, as shown in Fig. 11, the resistor unit 306 may be constructed to be provided with analog switches 308-1' to 308-n' which are turned on by causing the charge current control resistance setting unit 305 to set the "H" level to the corresponding control signals $S_X$' (X= 1 to n) when signals are received; and charge current control resistors $R_X$' (X = 1 to n) connected in series so as to control the charge current which flows via the secondary battery 220 by causing currents corresponding to the resistance of charge current control resistors to flow as the bypass current when the corresponding analog switches 308-$X$' (X= 1 to n) are turned on. With this construction, the same advantage as in the above-described second embodiment can be obtained as well.

[2.5.2] Second Modified Example

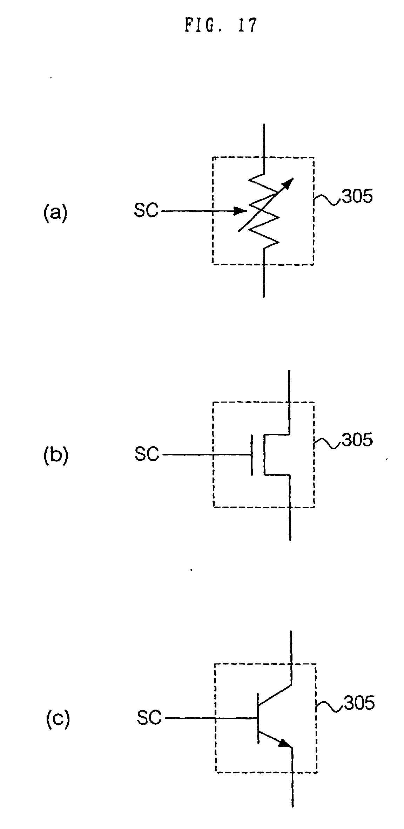

In the description of the second embodiment and the first modified example, the construction of the resistor unit 306 is the one in which the resistors are connected in parallel or in series. However, the resistor unit 306 may be constructed so that the bypass current amount is variable by using a variable resistor element, as shown in Fig. 17 (a), in which the resistance thereof can be changed in accordance with a control signal SC from the charge current control resistance setting unit 305, or by using a transistor, as shown in Figs. 17 (b) or (c), in which the control signal SC is input to the gate terminal or to the base terminal thereof. With this construction, the same advantage as in the above-described second embodiment can be obtained.

[3] The Third Embodiment

In each of the above-described embodiments, the charge current is bypassed so that the battery voltage across the secondary battery is prevented from exceeding the tolerance voltage. In this third embodiment, the battery voltage across the secondary battery is prevented from exceeding the tolerance voltage by controlling the energy balance between electric energy derived at the time of receiving a signal and electric energy released at the time of sending a signal.

That is, the electric energy corresponding to the electric energy charged in the secondary battery caused by the reception signal is released by means of transmission.

More specifically, the following methods may be contemplated.

[3.1] Echo-back Transmission of the Same Data as Received

Energy is balanced by applying echo-back transmission to the source of the same data as received.

[3.2] Transmission of Data for Discharge Corresponding to the Reception Data

Data is transmitted, which can discharge electrical energy corresponding to the charge electrical energy in receiving.

In this case, the amount of charge electrical energy and the amount of discharge electrical energy are not necessarily equal. The amount of discharge electrical energy may be appropriately selected in accordance with the battery voltage across the secondary battery.

For example, in a case in which the battery voltage is close to the tolerance voltage, that is, in a case in which the battery voltage exceeds the threshold voltage VTH shown in Fig. 12, the data for discharge should be selected so that:

the amount of charge electrical energy < the amount of discharge electrical energy

holds. In a case in which the battery voltage is less than the threshold voltage VTH shown in Fig. 12, the data for discharge should be selected so that:

the amount of charge electrical energy > the amount of discharge electrical energy

holds. In short, it is selected so that the amount of charge and that of the discharge are substantially identical.

[3. 3] Data Transmission Method Selected in Accordance with the Battery Voltage

When the battery voltage is close to the tolerance voltage, a discharging-side data transmission method is selected. When the battery voltage is lower than the tolerance voltage, a charging-side data transmission method is selected.

To be more specific, for example, a case is assumed in which data is transferred from the station to the electronic watch. When data block transfer is performed, the electronic-watch side should only reply (transfer acknowledgement, retransmission request, and the like) to data which is transmitted. Therefore, in comparison with a case in which each piece of data is individually transmitted, block transfer produces less energy loss.

Therefore, when the battery voltage is close to the tolerance voltage, pieces of data are individually transmitted. When the battery voltage is low, the data is transmitted all together using block transfer.

That is, the data transmission method should be adopted so that when the voltage across the secondary battery is close to the tolerance voltage,

discharge current > charge current

holds; and when the voltage across the secondary battery is lower than the tolerance voltage,

discharge current < charge current

holds.

[3.4] Advantages of the Third Embodiment

As described above, according to this third embodiment, by balancing charge energy corresponding to the reception data and discharge energy in a transmission, the voltage across the secondary battery can be controlled so as not to exceed the tolerance voltage. Therefore, degradation of the secondary battery can be lessened.

[4] Fourth Embodiment

In the above-described first embodiment and second embodiment, by bypassing the charge current using the charge current control circuits 235 and 300, respectively, the battery voltage across the secondary battery is controlled so as not to exceed the tolerance voltage. In the above-described third embodiment, by controlling the balance of the electrical energy derived at the time of receiving a signal and the electrical energy released at the time of transmitting a signal, the battery voltage across the secondary battery is controlled so as not to exceed the tolerance voltage. The fourth embodiment is an embodiment that prevents the charge current from the reception circuit from flowing into the secondary battery while signals are received.

In each of the above-described embodiments, the limiter circuit 231 is constructed to be activated so that the voltage across the secondary battery 220 in charging does not exceed the tolerance voltage.

However, when communication is performed, since the limiter circuit 231 is always in an inactive state, there is a possibility that the voltage across the secondary battery 220 may exceed the tolerance voltage due to the charge current from the reception circuit.

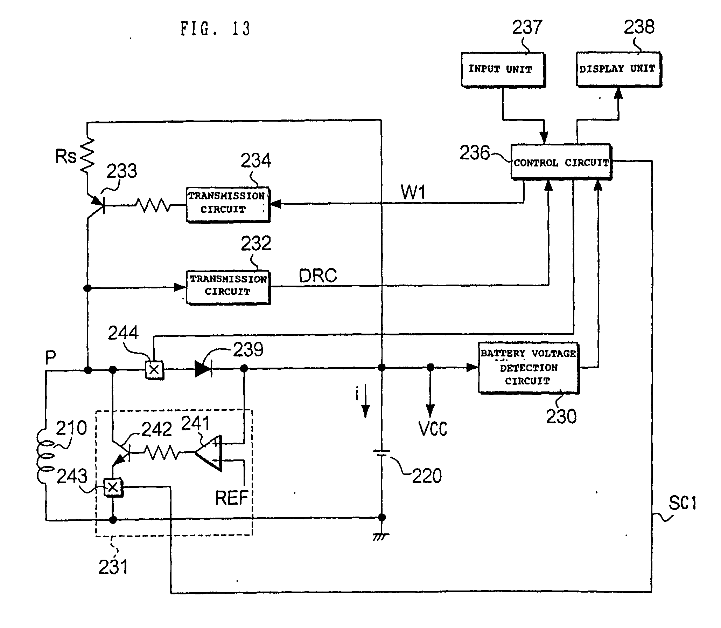

Therefore, in this fourth embodiment, as shown in Fig. 13, by providing an analog switch 244 in a charge current path leading from the reception circuit to the secondary battery, the control circuit 236 controls the switch so that the charge current does not flow into the secondary battery while the reception circuit performs the receiving operation.

As a result of this, in the same manner as in each of the above-described embodiments, using the simple construction, the voltage across the storage device (secondary battery) can be controlled so as not to exceed the tolerance voltage.

[5] Fifth Embodiment

In each of the above-described embodiments, in a case in which the voltage across the secondary battery 220 is higher than a predetermined voltage, the charge current control circuit 235 is put into a normally connected state.

However, when the charge current control circuit 235 maintains the connection state even during non-charging periods (including non-communicating periods), the secondary battery 220 is caused to discharge. Hence, there can be a problem in that the battery capacity is unnecessarily decreased.

On the other hand, since the limiter circuit 231 is active during the non-communicating period, the voltage across the secondary battery 220 does not exceed the tolerance voltage. However, since the limiter circuit 231 is inactive during the communicating period, the charge current control circuit 235 must be activated.

Therefore, in this fifth embodiment, a switch is provided in the charge current control circuit 235 in order to cause the control circuit 236 to activate the charge current control circuit 235 only during the communicating period in which the limiter circuit 231 is inactive.

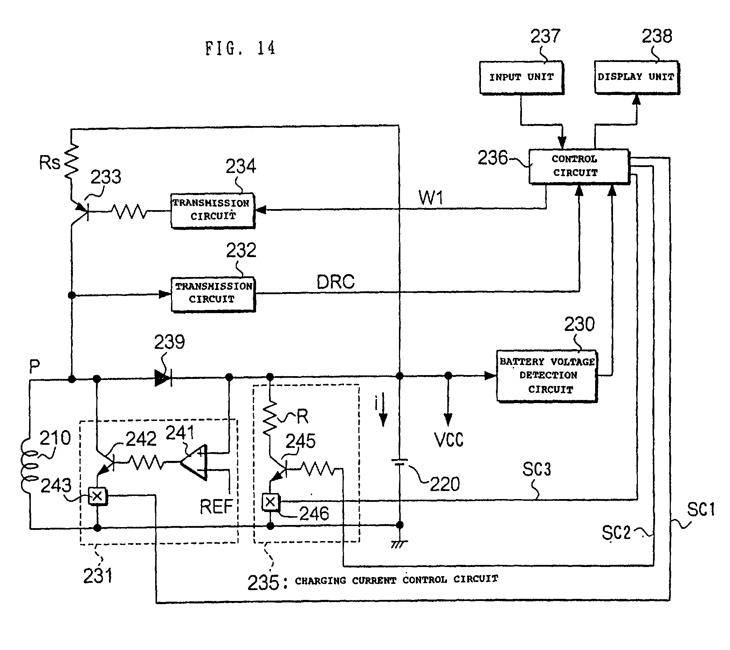

To be specific, as shown in Fig. 14, the analog switch 246, which is turned off during the normal operating period, and which causes the charge current control circuit 235 to be inactive under the control of the control circuit 236, is provided in a current path between the transistor switch 245 and the secondary battery 220.

Only when the limiter circuit 231 is put into the inactive state, in order to prevent the voltage across the secondary battery 220 from exceeding the tolerance voltage, this causes the analog switch 246 to be turned on, so that the charge current can be bypassed.

As a result of this, the unwanted discharge during the normal operation period is eliminated and the voltage across the secondary battery 220 can be maintained at the operational voltage.

[6] Modified Examples of the Embodiments

[6.1] First Modified Example

In the above-described embodiments, the charging state is determined based on the voltage across the secondary battery 220. However, the charging state can be arranged so as to be determined based on the variations of the charge current (average charge current; see Fig. 8) of the secondary battery. In this case, instead of the battery voltage detection circuit 230 in Fig. 3, a charge current detection circuit should be constructed so as to be provided for detecting the charge current of the secondary battery 220.

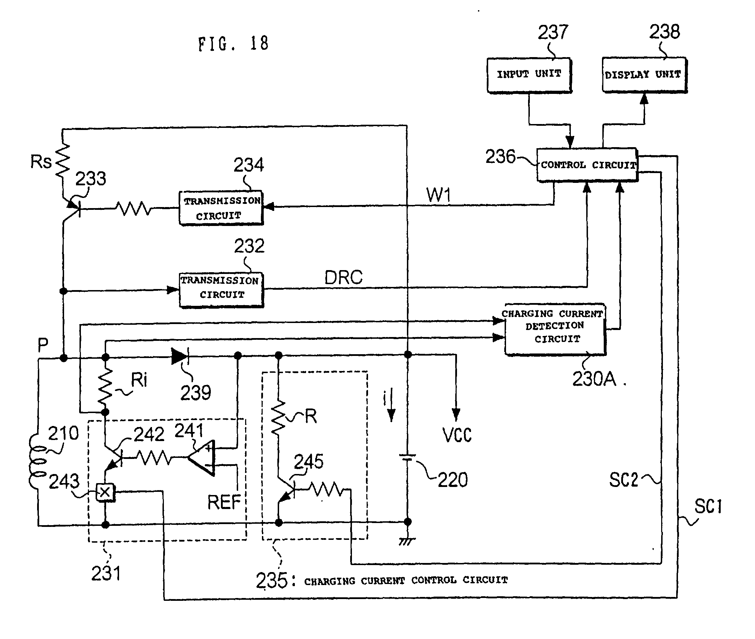

In other words, as shown in Fig. 18, instead of the battery voltage detection circuit 230, in a case in which the transistor 242 for detecting the charge current of the secondary battery 220 is turned on, a charge current detection circuit 230A for measuring a current flowing into the transistor 242 side via a current detecting resistor $R_i$ should be constructed so as to be provided in series with the transistor 242.

[6.2] Second Modified Example

In the above-described embodiments, the embodiments are described using an example in which the station 100 serves as an electronic device and the electronic watch 200 serves as an electronic device to be charged. The embodiments are not restricted to this example. For example, the invention can be applied to an electronic device provided with a secondary battery to be charged, such as an electric toothbrush, an electric shaver, a cordless telephone, a portable telephone, a personal handy phone system terminal, a mobile personal computer, or a PDA (Personal Digital Assistant), and to the chargers therefor.

[6.3] Third Modified Example

In the above embodiments, although the charge current control resistor is used exclusively for bypassing the charge current, it can be used for measuring the internal resistance of the secondary battery or for estimating the capacity thereof.

The example is described more specifically with reference to Fig. 3.

[6.3.1] Measurement of Internal Resistance

In a case in which the internal resistance is measured, initially, under the control of the control circuit 236, the charge current control resistor 235 detects a voltage value $E_{vd}$ of the secondary battery at the time of interruption of charging and then the control signal $SC_2$ is output, whereby the switch transistor 245 is turned on.

This allows the charge current control resistor R to be connected in parallel with the secondary battery 220, thereby forming a discharge path.

The battery voltage detection circuit 230 detects the voltage value $E_v$ of the secondary battery 220.

The voltage value $E_{vc}$ (charging-time voltage) in the period in which a signal is induced at a terminal P, that is, in the charging period, is stored in a first resistor, which is not shown, of the control circuit 236.

As the detecting timing of this voltage value $E_{vc}$, the timing just before the interruption of charging or the timing just after resumption of charging is preferable. Likewise, even the timing just after the interruption can be used as long as it enables increase in the voltage accompanied by the charging to be detected.

The voltage value $E_{vd}$ of the secondary battery 220 at the time just before a signal is induced at the terminal P, for example, at the time when a predetermined time (for example, 10 seconds) has elapsed since the interruption of the charging, is stored in a second resistor, which is not shown, of the control circuit 236.

The voltage value $E_{vr}$ of the secondary battery 220 at the time when a predetermined time has elapsed since the charge current control circuit 235 causes the charge current control resistor R to be connected to the secondary battery 220 is stored in a third resistor, which is not shown, of the control circuit 236.

Next, the control circuit 236 computes a difference between voltages $E_{vc}$ and $E_{vd}$, that is, increase in the voltage $\Delta E_v$ due to the internal resistance of the secondary battery 220.

The control circuit 236 can compute the internal resistance r of the secondary battery 220 based on the voltage values $E_{vd}$ and $E_{vr}$ and the resistance Re of the charge current control resistor R using the following expression

$$r = R_e \cdot (E_{vd}-E_{vr}) / E_{vr}.$$

[6.3.2] Estimation of Battery Capacity

The control circuit 236 is provided with a plurality of conversion tables for pre-converting the increase in the voltage $\Delta E_v$ ($=E_{vc}-E_{vd}$) into a battery capacity F and outputting it. The converting tables are arranged so as to each correspond to internal resistances (or internal resistance width) of the secondary battery 220 which are different from one another. By specifying, based on the computed internal resistance r of the secondary battery 220, a converting table among a plurality of converting tables to be actually used when increase $\Delta E_v$ ($= E_{vc} - E_{vd}$) in the voltage is converted into the battery capacity F and the battery capacity F is output, the battery capacity F can be easily computed.

The above-described measurement for the internal resistance and estimation method for the battery capacity are examples. Alternatively, the internal resistance measurement and the battery capacity estimation can be performed using another method based on the voltage across the secondary battery measured at a predetermined timing by controlling connection/non-connection of the charge current control resistor.

For example, they can be arranged so that the secondary battery is intermittently charged; the secondary battery is connected in parallel with the charge current control resistor in the interrupt period of charging; the charge voltage which is the voltage across the secondary battery at one time of a first predetermined period before the interruption of charging, the first predetermined period after the resumption of charging, and the first predetermined period after the interruption of charging (only during the period that enables increase in the voltage due to charging to be detected) is detected; a resistor-connection time voltage which is the voltage across the secondary battery at a second predetermined period after the interruption of charging is detected; the difference voltage is computed by subtracting the resistor-connection time voltage from the charging-time voltage; the internal resistance of the secondary battery is computed based on the difference voltage and the resistance of the charge current control resistor; and the battery capacitance of the secondary battery is estimated based on the difference voltage and the computed internal resistance.

[6.4] Fourth Modified Example

In the above-described third modified example, only the internal resistance of the secondary battery is measured. In the fourth modified example, charging control is additionally performed using the measured internal resistance.

In comparison with the battery voltage of the secondary battery in a case in which charging or communication (particularly reception) is not performed (hereinafter referred to as "normal battery voltage"), the battery voltage is higher in a case in which charging or communication (particularly reception) is performed (hereinafter as a matter of convenience, referred to as a communicating-time battery voltage).

This is because the voltage is raised due to the internal resistance of the secondary battery.

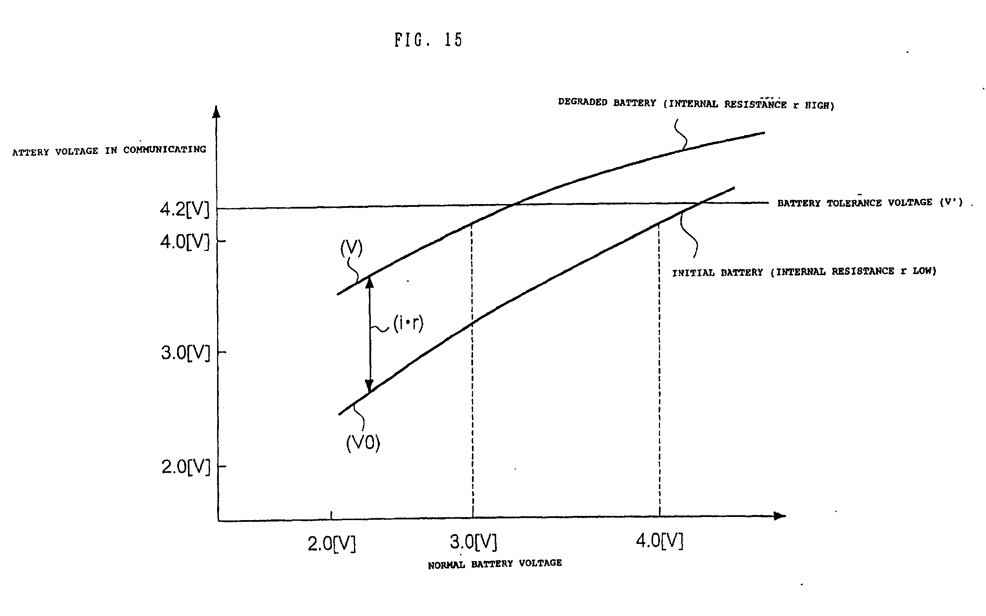

To be more specific, as shown in Fig. 15, in a fresh battery (a so-called "unused battery") whose internal resistance is low, the normal battery voltage and the communicating-time battery voltage are substantially identical.

On the other hand, in a degraded battery whose internal resistance is high, the communicating-time battery voltage is higher than the normal battery voltage.

For example, the communicating-time battery voltage across the fresh battery becomes approximately 4.0 [V] when the normal battery voltage is approximately 4.0 [V]. The communicating-time battery voltage across the degraded battery becomes approximately 4.0 when the normal battery voltage is approximately 2.8 [V].

Therefore, in a case in which the internal resistance r is not monitored, by previously making sure of the upper limit of the internal resistance of the battery during the service life thereof, even though the communicating-time battery voltage rises due to the degradation of the battery, the charge current must be controlled so that the communicating-time voltage does not exceed the battery tolerance voltage V' (in Fig. 15, approximately 4.2 [V]).

Accordingly, when the internal resistance r is not monitored, even in a case of the fresh battery in which the internal resistance thereof is low at an early stage of use, charging accompanied by the communication, that is, the charge current i, is limited. Therefore, in practical, charging cannot be performed using the current accompanied by communication (particularly, reception).

In this fourth modified example, considering variations in the internal resistance of the internal resistance r accompanying the degradation of the secondary battery, charging is performed as long as the voltage across the secondary battery does not exceeded the tolerance voltage V'. In order to obtain operational time of the electronic device, efficient charging is performed by monitoring the internal resistance of the secondary battery and by controlling the charge current in accordance with the internal resistance.

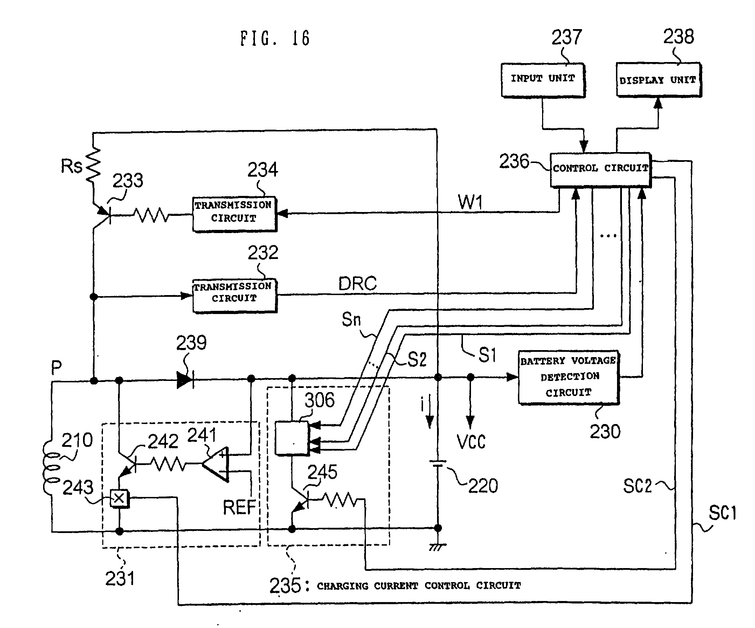

Fig. 16 shows a general construction block diagram of main components of an electronic watch which is an electronic device according to the fourth modified example. In Fig. 16, elements that are identical to corresponding elements in the first embodiment in Fig. 3 have the same reference numerals, and repeated description of identical elements is omitted.

In Fig. 16, that which differs from the first embodiment is a construction in which, instead of the charge current control resistor, the resistor unit 306 according to the second embodiment is provided and the control circuit 236 controls the resistor unit 306 (see Figs. 6 and 7) based on the internal resistance detected by the control circuit 236.

Next, main operations are described.

As shown in the third modified example, the control circuit 236 computes the difference between the voltage values $E_{vc}$ and $E_{vd}$, that is, increase in the voltage $\Delta E_v$ due to the internal resistance of the secondary battery 220 and then computes the internal resistance r based on the voltage values $E_{vd}$ and $E_{vr}$, and the resistance $R_e$ of the charge current control resistor R using the following expression

$$r = Re \cdot (E_{vd} - E_{vr}) / E_{vr}.$$

Next, the control circuit 236 computes the resistance of the resistor unit 306 corresponding to the computed internal resistance r, sets corresponding control signal $S_X$ (X: 1 to n) as the "H" level so that one or a plurality of charge current control resistors to be actually used is selected from among charge current control resistors $R_1$ to $R_n$, and outputs the corresponding control signal to the resistor unit 306.

This allows the resistor unit 306 to turn on a transistor corresponding to the control signal $S_X$ having the "H" level, whereby the corresponding charge current control resistor $R_X$ is inserted in the circuit.

As a result of this, the charge current of the secondary battery is set so as to flow under conditions in which the internal resistance r of the secondary battery 220 is low and the current is controlled so as not to flow under conditions in which the internal resistance r is high.

To be specific, the combined resistor $R_{SGM}$ of the resistor unit 306 is set with respect to the tolerance voltage V' of the secondary battery 220, the detected internal resistance r of the secondary battery 220, and the actual battery voltage $V_0$ so that the relationship

$$R_{SGM} \leq (r \cdot V')/(i_0 \cdot r + V_0 - V')$$

is satisfied. The charging-time voltage V of the secondary battery 220 is always satisfied by the relationship

$$V \leq V'.$$

Therefore, the voltage across the secondary battery 220 does not exceed the tolerance voltage V and charging can be efficiently performed.

[7] Additional Modes of the Present Invention

[7. 1] First Additional Mode

The electronic device is provided with a storage device in which charging can be performed from the outside and the charging voltage is set so as not to exceed the preset tolerance voltage, a reception circuit for receiving signals from the outside, and a charge current control circuit in which a resistance element and a switching circuit allowing the resistance element to be connected in parallel with the storage device are provided so that a predetermined amount of charge current is bypassed so as not to exceed the tolerance voltage across the storage device because of the reception. In the electronic device in which, by partially sharing the charging path to the storage device and the signal path to the reception circuit, the charging is applied to the storage device when the reception circuit receives signals, the electronic device is arranged so that internal resistance computation step is provided in which the resistance element is caused to discharge the storage device as a discharge resistor for the storage device and the internal resistance of the storage device is computed based on the voltage across the storage device at a predetermined timing.

[7.2] Second Additional Mode

The electronic device is provided with a storage device in which charging can be performed from the outside and the charging voltage is set so as not to exceed the preset tolerance voltage, a reception circuit for receiving signals from the outside, and a charge current control circuit in which a plurality of resistance elements and a switching circuit allowing one or a plurality of the resistance elements to be connected in parallel with the storage device are provided so that a predetermined amount of charge current is bypassed so as not to exceed the tolerance voltage across the storage device because of the reception. In the electronic device in which, by partially sharing the charging path to the storage device and the signal path to the reception circuit, the charging is applied to the storage device when the reception circuit receives signals, the electronic device is arranged so that internal resistance computation step is provided in which the resistance element is caused to discharge the storage device as a discharge resistor for the storage device and the internal resistance of the storage device is computed based on the voltage across the storage device at a predetermined timing.

[7.3] Third Additional Mode

In the first or second additional modes of the present invention, the resistance control step is arranged to be provided so as to control the resistance of the resistance element based on the detected internal resistance.

[7.4] Fourth Additional Mode

The electronic device is provided with a storage device in which charging can be performed from the outside and the charging voltage is set so as not to exceed the preset tolerance voltage, a reception circuit for receiving signals from the outside, and a charge current control circuit in which a variable resistance element connected in parallel with the storage device, an internal resistance detection circuit for detecting the internal resistance of the storage device and a resistance control circuit for controlling the resistance of the variable resistance element based on the detected internal resistance are provided so that a predetermined amount of charge current is bypassed so as not to exceed the tolerance voltage across the storage device because of the reception. In the electronic device in which, by partially sharing the charging path to the storage device and the signal path to the reception circuit, the charging is applied to the storage device when the reception circuit receives signals, the electronic device is arranged so that internal resistance computation step is provided in which the variable resistance element is caused to discharge the storage device as a discharge resistor for the storage device and the internal resistance of the storage device is computed based on the voltage across the storage device at a predetermined timing.

[7.5] Fifth Additional Mode

In the fourth additional mode of the present invention, the resistance control step is arranged to be provided so as to control the resistance of the variable resistance element based on the detected internal resistance.

[7.6] Sixth Additional Mode

The electronic device is provided with a storage device in which charging can be performed from the outside and the charging voltage is set so as not to exceed the preset tolerance voltage, and a reception circuit for receiving signals from the outside, wherein, by partially sharing the charging path to the storage device and the signal path to the reception circuit, the charging can be applied to the storage device when the reception circuit receives signals. The electronic device is arranged so as to be provided with voltage detection step for detecting the voltage across the storage device and charge current bypass step for controlling the voltage across the storage device so as not to exceed the tolerance voltage by forming a bypass path for bypassing by only a predetermined amount, based on the detected voltage across the storage device, the charge current flowing to the storage device because of reception only when the reception circuit receives signals.

[7.7] Seventh Additional Mode

In any of the first to sixth additional modes of the present invention, the battery capacity estimation step for estimating the battery capacity of the storage device based on the computed internal resistance of storage device is arranged to be provided.

**Claims**

**1.** An electronic device characterized in that:

a storage device is provided in which charging can be performed from the outside and the charged voltage is set so as not to exceed a predetermined tolerance voltage;
a reception device is provided for receiving a signal from the outside; and
a charge current control means is provided for controlling a charge current sent to said storage device from the reception device so as not to exceed said tolerance voltage; and
by partially sharing a charge path to said storage device and a signal path to said reception device, charging is applied to said storage device at the time of reception by said reception device.

**2.** An electronic device according to Claim 1,
characterized in that said charge current control means is provided with a charge current bypass means for bypassing said charge current by a predetermined amount.

**3.** An electronic device according to Claim 2,
characterized in that said charge current bypass means is provided with:

a resistance element; and
a switch means for allowing said resistance element to be connected in parallel with said storage device.

**4.** An electronic device according to Claim 2,
characterized in that said charge current bypass means is provided with:

a plurality of resistance elements; and
a switch means for allowing one of or a plurality of resistance elements from among said plurality of resistance elements to be connected in parallel with said storage device.

**5.** An electronic device according to Claim 3,
characterized in that said charge current control means is provided with:

an internal resistance detection means for measuring the internal resistance of said storage device; and

a resistance control means for controlling the resistance of said resistance element based on the measured internal resistance.

**6.** An electronic device according to Claim 4,
characterized in that said charge current control means is provided with:

an internal resistance measuring means for measuring the internal resistance of said storage device; and
a switch control means for controlling said switch means based on the measured internal resistance.

**7.** An electronic device according to Claim 2,
characterized in that said charge current bypass means is provided with:

a variable resistance element having a variable resistance; and
a resistance control means for controlling the resistance of said variable resistance element based on said charge current or said tolerance voltage.

**8.** An electronic device according to Claim 7,
characterized in that:

said charge current control means is provided with an internal resistance measuring means for measuring the internal resistance of said storage device; and
said resistance control means controls the resistance of said variable resistance element based on the measured internal resistance.

**9.** An electronic device according to Claim 1,
characterized in that:

said signal includes a start bit signal indicating the start of data; and
said charge current control means starts to control said charge current based on the timing of reception of said start bit signal.

**10.** An electronic device according to Claim 9,
characterized in that said charge current control means terminates the control of said charge current based on the received termination timing of the data corresponding to said start bit signal.

**11.** An electronic device according to Claim 1,
characterized in that said charge current control means controls said charge current in accordance with a charge condition corresponding to the signal pattern of said signal.

**12.** An electronic device according to Claim 1,
characterized in that:

said charge current control means is provided with an accumulated voltage detection means for detecting the accumulated voltage across said storage device; and
in a case in which said accumulated voltage detected by said accumulated voltage detection means exceeds a predetermined operation activating voltage, said charge current to said storage device due to the reception is controlled so as not to exceed said tolerance voltage.

**13.** An electronic device according to Claim 2,
characterized in that said charge current bypass means is provided with a bypass path forming switch means for forming a bypass path only at the time of reception by said reception device.

**14.** An electronic device including a storage device in which charging can be performed from the outside, the charged voltage set so as not to exceed a predetermined tolerance voltage, and a reception circuit in which a signal from the outside is received, whereby partial sharing of a charging path to said storage device and a signal path to said reception circuit enables charging to be applied to said storage device at the time of reception of said reception circuit, said electronic device characterized in that there is provided an energy balance control means for controlling the accumulated voltage across said storage device so as not to exceed the tolerance voltage by controlling a balance between charge energy to said storage device and discharge energy from said storage device.

15. An electronic device according to Claim 14,
characterized in that said energy balance control means is provided with a data return means for transmitting predetermined return data corresponding to the received data.

16. An electronic device according to Claim 15,
characterized in that said data return means causes the return data to be identical to the received data.

17. An electronic device according to Claim 15,
characterized in that said data return means selects, as said return data, data corresponding to the amount of the charge energy of the received data from among a predetermined plurality of data.

18. An electronic device according to Claim 14,
characterized in that when return data corresponding to the received data is transmitted, said energy balance control means selects, based on the accumulated voltage across said storage device, any one transfer method from among a plurality of transfer methods whose discharge energies required for transmitting said return data are different, and transmits the return data.

19. An electronic device according to Claim 18,
characterized in that said energy balance control means selects:

in a case in which the accumulated voltage across said storage device is higher than a predetermined first reference voltage, a transfer method in which the transmitting-time discharge current due to the return data is higher than the receiving-time charge current due to the received data; and
in a case in which the accumulated voltage across said storage device is lower than a predetermined second reference voltage, a transfer method in which the transmitting-time discharge current due to the return data is lower than the receiving-time charge current due to the received data.

20. An electronic device according to Claim 14,
characterized in that said energy balance control means is provided with:

data return means for transmitting predetermined return data corresponding to the received data; and
discharge current control means for controlling the discharge current of said storage device when the return data is transmitted.

21. An electronic device according to Claim 20,
characterized in that said discharge current control means is provided with:

a plurality of resistance elements;
a resistance selection and insertion means for selecting any one of or a plurality of resistance elements from among said plurality of resistance elements in accordance with the discharge current to be set and inserting the selected resistance element into a discharge path.

22. An electronic device according to Claim 20,
characterized in that said discharge current control means is provided with:

a variable resistance element provided in the discharge path having a variable resistance; and
a resistance control means for controlling the resistance of said variable resistance element based on the discharge current to be set.

23. An electronic device including a storage device in which charging can be performed from the outside, the charge voltage set so as not to exceed a predetermined tolerance voltage, and a reception circuit in which a signal from the outside is received, whereby partial sharing of a charging path to said storage device and a signal path to said reception circuit enables charging to be applied to said storage device at the time of reception by said reception circuit, said electronic device being characterized in that the charge current control means is provided with:

an accumulated voltage measuring means for measuring the accumulated voltage across said storage device; and

a switch means provided between said reception circuit and said storage device for causing said reception circuit and said storage device to be disconnected when said accumulated voltage measured by said accumulated voltage measuring means exceeds said tolerance voltage.

24. A control method for an electronic device including a storage device in which charging can be performed from the outside, the charge voltage set so as not to exceed a predetermined tolerance voltage, and a reception circuit in which a signal from the outside is received, whereby partial sharing of a charging path to said storage device and a signal path to said reception circuit enables charging to be applied to said storage device at the time of reception of said reception circuit, said control method for an electronic device being characterized in that there are provided:

a voltage measuring step for measuring the voltage across said storage device; and

a charge current bypass step for controlling the voltage across said storage device so as not to exceed said tolerance voltage by bypassing the charge current to said storage device due to the reception by a predetermined amount based on the measured voltage across said storage device.

FIG. 1

FIG. 2

EP 1 096 638 A1

FIG. 3

237 INPUT UNIT

238 DISPLAY UNIT

236 CONTROL CIRCUIT

Rs

233

234 TRANSMISSION CIRCUIT

W1

232 TRANSMISSION CIRCUIT

DRC

239

230 BATTERY VOLTAGE DETECTION CIRCUIT

P

210

242 241

243

REF

R

245

i

VCC

220

231

235 : CHARGING CURRENT CONTROL CIRCUIT

SC2

SC1

FIG. 4

i: CHARGING CURRENT
r: INTERNAL RESISTOR IN CHARGING
V: BATTERY VOLTAGE IN CHARGING
V0: ACTUAL BATTERY VOLTAGE

$V=V0+ir$

FIG. 5

FIG. 6

```
301
        DCMP
V ——[ + \
        [    >————
VREF —[ - /

302              303
CONTROL                    CHARGING CURRENT
PERIOD           [AND]     CONTROL
SETTING                    RESISTANCE
        DC1     DCIND      SETTING
                           305

304
PARAMETER
SETTING

V',i (IN ADDITION V0, r)

306
RESISTOR
UNIT

S1~Sn
```

FIG. 7

```
VCC

        R1      R2  •••  Rn

                            308-n
                   308-2          Sn
        308-1                     S2
                                  S1
```

FIG. 8

CHARGING CURRENT

BATTERY VOLTAGE

# FIG. 9

FIG. 10

(a) RECEPTION SIGNAL

(b) CONTROL PERIOD
INSTRUCTION DATA

D CIND

(c)

V'

(d) CONVENTION

V'

FIG. 11

VCC

Rn'    ☒ ←——o Sn'

R2'    ☒ ←——o S2'

R1'    ☒ ←——o S1'

27

FIG. 12

CHARGING IN
COMMUNICATION

DISCHARGING IN
COMMUNICATION

CURRENT

TRANSMISSION CURRENT

CHARGING CURRENT

VTH

BATTERY VOLTAGE

FIG. 13

EP 1 096 638 A1

FIG. 14

## FIG. 15

DEGRADED BATTERY (INTERNAL RESISTANCE r HIGH)

ATTERY VOLTAGE IN COMMUNICATING

BATTERY TOLERANCE VOLTAGE (V')

4.2[V]

4.0[V]

(V)

INITIAL BATTERY (INTERNAL RESISTANCE r LOW)

(i·r)

3.0[V]

2.0[V]

(V0)

2.0[V]　　3.0[V]　　4.0[V]

NORMAL BATTERY VOLTAGE

EP 1 096 638 A1

FIG. 16

FIG. 17

(a)  SC —— ⌇305

(b)  SC —— ⌇305

(c)  SC —— ⌇305

FIG. 18

238 DISPLAY UNIT
237 INPUT UNIT
236 CONTROL CIRCUIT
230A CHARGING CURRENT DETECTION CIRCUIT
234 TRANSMISSION CIRCUIT
232 TRANSMISSION CIRCUIT
233
Rs
W1
DRC
P
Ri 239
210
243
242 241
REF
231
245
R
235: CHARGING CURRENT CONTROL CIRCUIT
VCC
220
SC1
SC2

# INTERNATIONAL SEARCH REPORT

| International application No. |
|---|
| PCT/JP00/01705 |

**A. CLASSIFICATION OF SUBJECT MATTER**
Int.Cl⁷ H02J 7/00 , H02J 17/00 , H04B 5/00

According to International Patent Classification (IPC) or to both national classification and IPC

**B. FIELDS SEARCHED**

Minimum documentation searched (classification system followed by classification symbols)
Int.Cl⁷ H02J 7/00-7/12 , H02J 17/00 , H04B 5/00-5/06

Documentation searched other than minimum documentation to the extent that such documents are included in the fields searched

| | | | |
|---|---|---|---|
| Jitsuyo Shinan Koho | 1926-1996 | Jitsuyo Shinan Toroku Koho | 1996-2000 |
| Kokai Jitsuyo Shinan Koho | 1971-2000 | Toroku Jitsuyo Shinan Koho | 1994-2000 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | US, 5105190, A (N.V.Nerderlandsch Apparetengabiek Nedap), 14 April, 1992 (14.04.92) | 1,2,12 |
| Y | & BP, 242906, A & AU, 8771855, A | 3,7 |
| | & CA, 1290841, A & DE, 3774473, G | |
| A | & DK, 8702053, A & EP, 242906, B | 4-6,8-11,13-24 |
| | &ES2027276,T3 | |
| | & IL, 82299, A & JP, 5-347572, A | |
| | & JP, 62-289023, A & NL, 8601021, A | |
| | & NO, 8701647, A | |
| Y | JP, 7-79182, A (Yamatake Honeywell Co., Ltd.), 20 March, 1995 (20.03.95), page 3, left column, lines 6 to 12; Fig. 2 (Family: none) | 1-3,7,12 |
| P | JP, 11-120306, A (TOKIMEC INC.), 30 April, 1999 (30.04.99) (Family: none) | 1-3,7,12 |
| A | JP, 7-273697, A (IDEC IZUMI CORPORATION), 20 October, 1995 (20.10.95) (Family: none) | 1-24 |

☐ Further documents are listed in the continuation of Box C.  ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier document but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 12 June, 2000 (12.06.00) | 27 June, 2000 (27.06.00) |

| Name and mailing address of the ISA/ | Authorized officer |
|---|---|
| Japanese Patent Office | |
| Facsimile No. | Telephone No. |

Form PCT/ISA/210 (second sheet) (July 1992)